# EUROPEAN PATENT SPECIFICATION

(11) **EP 4 464 522 B1**
(45) Date of publication and mention of the grant of the patent: **12.11.2025**
(21) Application number: 24174793.0
(22) Date of filing: 08.05.2024
(51) Int. Cl.: B60C 11/04, B60C 11/12, B60C 11/13

(54) **TRUCK TIRE**
LASTWAGENREIFEN
PNEU DE CAMION

(30) Priority: 18.05.2023 US 202318319710
(43) Date of publication of application: 20.11.2024
(73) Proprietor: The Goodyear Tire & Rubber Company, Akron, OH 44316 (US)
(72) Inventor: BECKER, Derek John, Munroe Falls, 44262 (US); PRIBULA, David Michael, Alliance, 44601 (US)
(74) Representative: Kutsch, Bernd

(56) References cited:
- EP-A1- 2 570 272
- EP-A1- 4 303 037
- JP-A- H10 250 317
- KR-A- 20060 058 922

## Description

### Field of the Invention

The invention relates generally to vehicle tires and, more specifically, to a tread pattern for steer tires intended for truck application.

### Background of the Invention

Truck tires are required to provide a suitable level of wet and snow performance while rolling resistance performance and fuel mileage efficiency achieved by the tire is maintained. Moreover, it is desired that such tires provide a high level of cornering stiffness and resistance to tread wear in order to prolong the useful life of the tire tread. Accordingly, there is a need for a truck steer tire having a tread pattern that functionally meets such competing objectives to thereby provide the user with acceptable overalltire performance.

EP 4 303 037 A1, which has been published only after the priority date of this application, JP H10 250 317 A, EP 2 570 272 A1 and KR 2006 0058922 A describe tires comprising a tire tread comprising a first and second rib separated by a tread groove, wherein a plurality of discrete tie-bar elements is disposed within the tread groove and wherein the tie-bar elements have opposed sidewalls separated by a radially extending tie bar groove.

### Summary of the Invention

The invention relates to a tire in accordance with claim 1.

Dependent claims refer to preferred embodiments of the invention.

### Definitions

"Aspect ratio" of the tire means the ratio of its section height (SH) to its sectionwidth (SW) multiplied by 100 percent for expression as a percentage.

"Asymmetric tread" means a tread that has a tread pattern not symmetrical about the center plane or equatorial plane EP of the tire.

"Axial" and "axially" means lines or directions that are parallel to the axis ofrotation of the tire.

"Circumferential" means lines or directions extending along the perimeter of the surface of the annular tread perpendicular to the axial direction.

"Equatorial Center plane (CP)" means the plane perpendicular to the tire's axis of rotation and passing through the center of the tread.

"Footprint" means the contact patch or area of contact of the tire tread with a flat surface at zero speed and under normal load and pressure.

"Groove" means an elongated void area in a tread that may extend circumferentially or laterally about the tread in a straight, curved, or zigzag manner. Circumferentially and laterally extending grooves sometimes have common portions. The "groove width" is equal to tread surface area occupied by a groove or groove portion, the width of which is in question, divided by the length of such groove or groove portion; thus, the groovewidth is its average width over its length. Grooves may be of varying depths in a tire. The depthof a groove may vary around the circumference of the tread, or the depth of one groove may be constant but vary from the depth of another groove in the tire. If such narrow or wide grooves are substantially reduced depth as compared to wide circumferential grooves which the interconnect, they are regarded as forming "tie bars" tending to maintain a rib-like character intread region involved.

"Lateral" means an axial direction.

"Lateral edges" means a line tangent to the axially outermost tread contact patch or footprint as measured under normal load and tire inflation, the lines being parallel to the equatorial center plane.

"Net contact area" means the total area of ground contacting tread elements between the lateral edges around the entire circumference of the tread divided by the gross areaof the entire tread between the lateral edges.

"Outboard side" means the side of the tire farthest away from the vehicle whenthe tire is mounted on a wheel and the wheel is mounted on the vehicle.

"Radial" and "radially" means directions radially toward or away from the axis of rotation of the tire.

"Rib" means a circumferentially extending strip of rubber on the tread which is defined by at least one circumferential groove and either a second such groove or a lateral edge, the strip being laterally undivided by full-depth grooves.

"Tread element" or "traction element" means a rib or a block element defined by adjacent grooves.

### Brief Description of the Drawings

The invention will be described by way of example and with reference to the accompanying drawings in which:
FIG. 1 is a front perspective view of a tire of the present invention;
FIG. 2 is a front view of a portion of the tread of the tire of FIG.1;
FIG. 3 is a section view through a tie bar of the tire tread region; and
FIG. 4 is a section view of the tie bar under load in the footprint.

### Detailed Description of Preferred Embodiments of the Invention

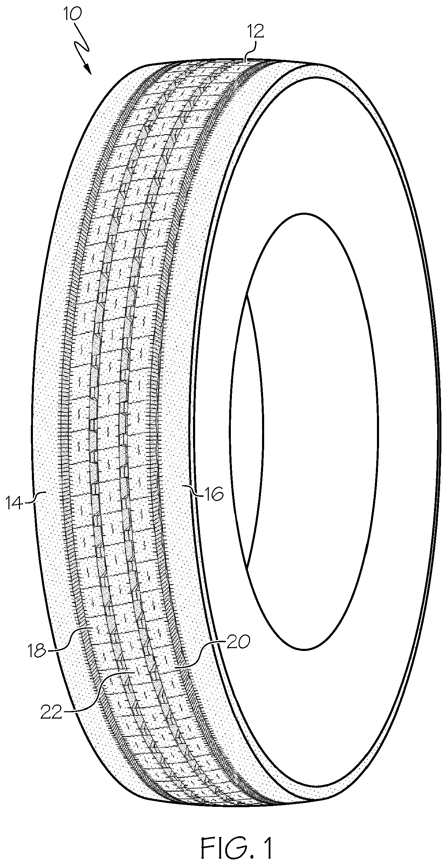

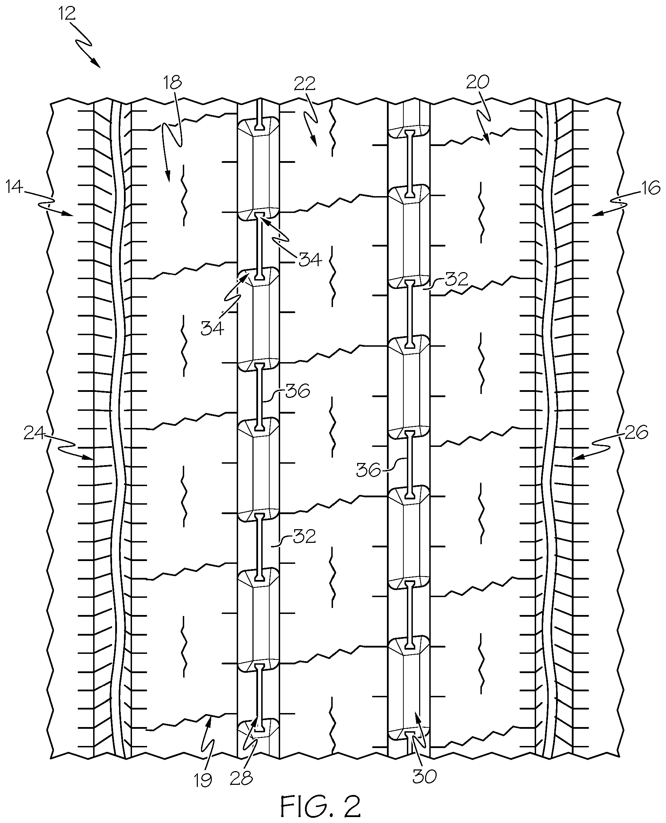

With reference to FIGS. 1 and 2, a first embodiment of a tire 10 of the present invention is provided having a circumferentially continuous tread region 12. The tread 12 preferably includes a center rib 22, a first and second shoulder rib 14, 16 disposed on each side of the center rib 22, and a first and second intermediate rib 18, 20 disposed on opposite sides of the center rib 22. An equatorial center plane divides the tread 12 into two, preferably symmetrical halves. A pair of circumferentially continuous intermediate grooves 28, 30 are located between the center rib 22 and a respective intermediate rib. A pair of circumferentially continuous shoulder grooves 24, 26 separate respectively, the intermediate ribs 18, 20 from the shoulder ribs 14, 16.

Situated within at least one of said grooves 28, 30, 24, 26, preferably within one or both of the intermediate grooves 28, 30, is a plurality of discrete tie-bar elements 32 circumferentially spaced apart from each other around the circumference of the tire 10.

Each of the tie bar elements 32 preferably has a generally quadrilateral shape with an elongate dimension in a circumferential direction. It is bounded along longitudinal sides of the respective tie bar element 32 by adjacent ribs 18, 20, 22 of the tread 12 and along transverse sides by end walls 34 of the respective tie bar element 32.

The two end walls 34 of each tie bar element 32 are preferably angled and are more preferably angled in a direction away from each other when moving from the radially outermost surface 39 of the respective tie bar element 32 radially inwards. The angles the end walls 34 of the tie bar elements 32 make on each side with respect to the radial direction of the tire are preferably in a range of from +/-3 to +/-30 degrees, more preferably +/-5 to +/-20 degrees.

The tie-bar elements 32 are spaced apart by a circumferential spacing lying within a range of from 15 mm to 90 mm or from 15 to 45 mm.

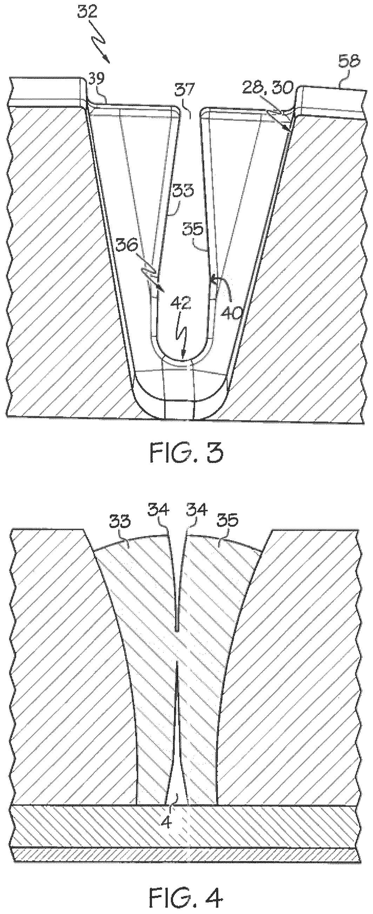

As best shown in Fig. 3, each tie-bar element 32 has opposed sidewalls 33, 35 which extend laterally (or axially) towards each other from the adjacent ribs 18, 20, 22.

The opposed sidewalls 33, 35 are separated by a tie bar groove 36. The tie bar groove 36 has a radially upper or outermost portion 37 which is preferably the axially narrowest width portion of the tie bar groove 36. The radially upper portion 37 is or starts at the radially outer surface of the tie bar element 32 and radially close to the tread surface 58.

The tie bar groove 36 tapers laterally outward when moving radially inward thus increasing in axial thickness from a narrow portion to a wider, radially lower portion 40. Preferably, the increase in axial thickness from the upper portion 37 to the lower portion 40 is linear or about linear. The radial distance from the upper portion 37 to the lower portion 40 is preferably in a range of from 5 to 10 mm.

Moving from the radially lower portion 40 further radially inwards, the opposed sidewalls 33, 35 preferably have a constant width apart and preferably terminate in a generally rounded, circular or hemi circular bottom portion 42. The constant width apart preferably extends over a radial distance in a range of from 1 to 3 mm.

The hemi circular bottom portion 42 preferably has an axial width in a range of from 2 mm to 4 mm, and preferably lies at the base of the tie-bar element 32.

A tie bar channel 4 extends circumferentially through one or more of the tie-bar elements 32, preferably through each of the tie bar elements 32, and provides a conduit for snow and rain management. It is preferably dimensioned such that it remains open during operation of the tire 10 under the load the tire is designed for (rolling through the footprint).

As will be noted from FIG. 2, the tie-bar opposed sidewalls 33, 35 are recessed radially inward, preferably in a range of from 0.5 to 3 mm or from 0.8 to 2 mm, from the radially outermost tread surface 58. Thus, in the new condition, the upper surface 37 of each tie-bar element 32 does not constitute a part of the rolling tire footprint. After some wear of the tread 12 has occurred, the surface 39 of each block element 32 is exposed and becomes part of the rolling tire footprint. Alternatively, if desired, the tie-bar elements 32 may also be constructed as the same height as the outer tread surface 58 when the tire 10 is new or unworn.

The maximum axial width of the intermediate grooves 28, 30 is within a preferred range of from 9 mm to 15 mm.

The maximum axial width of tie bar groove 36 in the upper portion 37 is preferably within a range of 0.5 mm to 1.5 mm. This width is preferably selected such that the tie-bar opposed sidewalls 33, 35 engage each other and thereby close during operation of the tire 10 under the load the tire is designed for (rolling through the footprint) while the tie bar channel 4 remains open.

It will be appreciated that the intermediate grooves 28, 30 have an axial width at a radially outward tread surface 58 and have a maximum groove depth lying within a preferred range of from 12 mm to 18 mm. The tie-bar elements 32 are preferably radially recessed within a respective intermediate groove 28, 30 and have a block element radial height lying within a preferred range of from 11 mm to 17 mm.

The disclosed tread configuration reduces shoulder wear and irregular wear due to the rib width within a five-rib design. The center rib 22 and the intermediate ribs 18, 20 are relatively narrow and within a preferred range of from 50 to 80 percent relative to the relatively wider shoulder ribs 14, 16, having an axial width within a preferred range of from 40 mm to 60 mm. Consequently, the cornering stiffness provided by the tread is increased and frictional energy is reduced relative to five rib tires having a conventionally uniform rib design. As a result, the mileage provided by the tread 12 is increased.

The described arrays of tie-bar elements 32 within the grooves, preferably the intermediate grooves 28, 30, make the tread 12 more rigid and help to increase the cornering stiffness and also enhance better snow and wet performance through the tire life. The tie-bar elements 32 also stiffen the tread 12 for better cornering and mileage performance. The tie-bar elements 32, recessed within respective grooves 28, 30, are preferably not in contact with a road surface when the tire 10 is new but establish contact after the tire tread wears. When the tie-bar elements 32 come into contact with road surface, the edges 34 at the opposed walls 33, 35 become additional edges in the footprint area of the tire 10. The tie bar channel 4 of each tie-bar element 32 constitutes an air and water conduit for directing air and water through the tie bar elements 32.

Allowing air to pass through the tie bar elements 32 eliminates trapped air and thereby reduces the noise level of the tread 12. Also, by allowing the passage of water through the tie bar channels 4, aquaplaning is eliminated or reduced.

In the five rib construction of the tread region 12, the net-to-gross ratio defined as net contact area (area enclosing the pattern of the tire tread in contact with a flat surface excluding the area of grooves or other voids at a definite load and inflation) to gross contact area (area enclosing the pattern of the tire tread in contact with a flat surface including the area of grooves or other voids at a definite load and inflation) is increased. The addition of the tie-bar elements 32 increases the lateral stiffness of the tread without impacting the circumferential stiffness of the tread.

When the tie-bar element 32 enters the footprint of the rolling tire, the tie bar groove 36 closes in the axial direction, bringing the opposed sidewalls 33, 35 of the upper portion 37 of the tie-bar elements 32 together in touching relationship. As a result, the lateral stiffness of the tread 12 within the footprint is increased when the tie-bar element 32 is within the footprint, whereby cornering stiffness is enhanced, and frictional energy reduced.

When a tie-bar element 32 leaves the footprint of the rolling tire, the tie-bar element 32 separates in the axial direction and the groove 36 is reopened to its original width. The tie-bar elements 32 thus help improve mileage performance of the tire 12 by enhancing stiffness and reducing treadwear from lateral loads on the tread. The wider shoulder rib configuration further reduces the shoulder wear phenomena. As the tread 12 wears through use, the tie-bar elements 32 become road contacting elements and the edges 34, 35 of the tie-bar elements 32 define additional contacting edges for enhanced traction.

The one or more array of tie-bar elements 32 accordingly do not obstruct the functional performance of the groove 28, 30 in which the tie bar elements 32 are situated, and fluid such as rain or snow melt is able to traverse the circumferential groove 36 unobstructed by the array of tie-bar elements 32. The tire tread 12 thereby provides high mileage and durability desired by the user.

## Claims

1. A tire comprising a tire tread (12) comprising a first and second rib (18, 22), wherein the first and second ribs (18, 22) are separated by a tread groove (28), wherein a plurality of discrete tie-bar elements (32) is disposed within the tread groove (28) with circumferentially adjacent tie-bar elements (32) being separated by a circumferential spacing within a range of from 15 mm to 90 mm, the tie-bar elements (32) having opposed sidewalls (33, 35) separated by a radially extending tie bar groove (36), and wherein the radially extending tie bar groove (36) tapers from a first axial width to a second width, the second width being wider than the first width, when moving radially inwards in the tie bar groove (36).

2. The tire of claim 1, wherein the tie bar groove (32) has a radially lower portion wherein the opposed sidewalls (33, 35) are spaced apart at a constant width.

3. The tire of claim 1 or 2, wherein the tie bar element (32) has a recessed upper surface (39) relative to an upper surface (58) of the tread (12).

4. The tire of at least one of the previous claims, wherein the circumferential spacing is within a range of from 15 to 45 mm.

5. The tire of at least one of the previous claims, wherein the tie bar groove (32) includes a radially lower tie bar channel (4).

6. The tire of claim 5, wherein the radially lower tie bar channel (4) is configured such that is remains open during operation of the tire (10) under a load the tire (10) is designed for.

7. The tire of at least one of the previous claims, wherein the tread (12) includes a center rib (22), a first and second shoulder rib (14, 16) disposed on each side of the center rib (22), a first and second intermediate rib (18, 20) disposed on opposite sides of the center rib (22), and pair of circumferentially continuous intermediate grooves (28, 30) that are located between the center rib (22) and a respective intermediate rib (18, 20), and, optionally, wherein the tread (12) further comprises a pair of circumferentially continuous shoulder grooves (24, 26) which separate respectively, the intermediate ribs (18, 20) from the shoulder ribs (14, 16).

8. The tire of at least one of the previous claims, wherein a plurality of discrete said tie-bar elements (32) are circumferentially spaced apart from each other around the circumference of the tire (10) and wherein said tie-bar elements (32) are located within one or more of said grooves (28, 30, 24, 26), preferably at least or only within one or both of the intermediate grooves (28, 30).

9. The tire of at least one of the previous claims, wherein the tie bar elements (32) have a generally quadrilateral shape with an elongate dimension in a circumferential direction and wherein the tie bar elements (32) are bounded along longitudinal sides of the respective tie bar element (32) by adjacent ribs (18, 20, 22) of the tread (12) and along transverse sides by end walls (34) of the respective tie bar element 32, the end walls (34) being preferably angled.

10. The tire of at least one of the previous claims, wherein the tie bar groove (36) has a radially upper or outermost portion (37) which is preferably the axially narrowest width portion of the tie bar groove (36), wherein the tie bar groove (36) tapers laterally outward when moving radially inward thus increasing in axial thickness to an axially wider, radially lower portion (40) and wherein, when moving from the radially lower portion (40) further radially inwards, the opposed sidewalls (33, 35) have a constant width apart and preferably terminate in a generally rounded, circular or hemi circular bottom portion (42).

11. The tire of at least one of the previous claims, wherein the constant width apart extends over a radial distance in a range of from 1 to 3 mm; and/or wherein the bottom portion (42) has an axial width in a range of from 2 mm to 4 mm and preferably lies at the radially innermost base of the tie-bar element (32).

12. The tire of at least one of the previous claims, wherein the maximum axial width of tie bar groove (36) in the upper portion (37) is within a range of 0.5 mm to 1.5 mm or is such that the tie-bar opposed sidewalls (33, 35) engage each other and thereby close during operation of the tire (10) under the load the tire (10) is designed for while the tie bar channel (4) remains open.

13. The tire of at least one of the previous claims, wherein the center rib (22) and the intermediate ribs (18, 20) have a width in a range of from 50 to 80 percent of the relatively wider shoulder ribs (14, 16), the shoulder ribs (14, 16) preferably having an axial width within a range of from 40 mm to 60 mm.

14. The tire of at least one of the previous claims, wherein the tire (10) is a truck tire.

15. The tire of at least one of the previous claims, wherein the tire (10) is a truck steer tire.

## Patentansprüche

1. Reifen, der eine Lauffläche (12) umfasst, die ihrerseits eine erste und eine zweite Rippe (18, 22) umfasst; wobei die erste und die zweite Rippe (18, 22) durch eine Laufflächennut (28) voneinander getrennt sind; wobei eine Anzahl von in Form von Profilstegen diskreten Elementen (32) innerhalb der Laufflächennut (28) angebracht sind; wobei die in der Form von Profilstegen ausgebildeten Elemente (32), die in Umfangsrichtung benachbart sind, durch einen Umfangsabstand voneinander getrennt sind, der in einem Bereich von 15 mm bis 90 mm liegt; wobei die in der Form von Profilstegen ausgebildeten Elemente (32) gegenüberliegende Seitenwände (33, 35) aufweisen, die durch eine sich in der radialen Richtung erstreckende Profilstegnut (36) voneinander getrennt sind; und wobei die sich in der radialen Richtung erstreckende Profilstegnut (36) von einer ersten axialen Breite zu einer zweiten Breite verjüngt ist, wobei die zweite Breite größer ist als die erste Breite, wenn man sich in der Profilstegnut (36) in der radialen Richtung nach innen bewegt.

2. Reifen nach Anspruch 1, wobei die Profilstegnut (36) einen unteren Abschnitt in der radialen Richtung aufweist; wobei die gegenüberliegenden Seitenwände (33, 35) in einer konstanten Breite voneinander beabstandet sind.

3. Reifen nach Anspruch 1 oder 2, wobei das in der Form von einem Profilsteg ausgebildete Element (32) eine gegenüber einer oberen Oberfläche (58) der Lauffläche (12) ausgesparte obere Oberfläche (39) aufweist.

4. Reifen nach mindestens einem der vorhergehenden Ansprüche, wobei der Abstand in Umfangsrichtung in einem Bereich von 15 bis 45 mm liegt.

5. Reifen nach mindestens einem der vorhergehenden Ansprüche, wobei das in der Form von einem Profilsteg ausgebildete Element (32) einen in radialer Richtung unteren Profilstegkanal (4) umfasst.

6. Reifen nach Anspruch 5, wobei der in der radialen Richtung untere Profilstegkanal (4) derart ausgebildet ist, dass er während des Betriebs des Reifens (10) unter einer Last, für die der Reifen (10) ausgelegt ist, offen bleibt.

7. Reifen nach mindestens einem der vorhergehenden Ansprüche, wobei die Lauffläche (12) eine mittlere Rippe (22), eine erste und eine zweite Schulterrippe (14, 16), die auf jeder Seite der mittleren Rippe (22) angeordnet sind, umfasst, eine erste und eine zweite Zwischenrippe (18, 20), die auf gegenüberliegenden Seiten der mittleren Rippe (22) angebracht sind, und ein Paar von Zwischennuten (28, 30), die sich in Umfangsrichtung kontinuierlich erstrecken und zwischen der mittleren Rippe (22) und einer jeweiligen Zwischenrippe (18, 20) angeordnet sind, und wobei optional die Lauffläche (12) ferner ein Paar in Umfangsrichtung durchgehende Schulterrippen (24, 26) umfasst, die jeweils die Zwischenrippen (18, 20) von den Schulterrippen (14, 16) trennen.

8. Reifen nach mindestens einem der vorhergehenden Ansprüche, wobei eine Anzahl von der oben genannten in der Form von Profilstegen diskreten Elementen (32) in Umfangsrichtung um den Umfang des Reifens (10) voneinander beabstandet sind; und wobei die oben genannten in der Form von Profilstegen Elemente (32) in einer oder mehreren der oben genannten Nuten (28, 30, 24, 26), vorzugsweise mindestens oder nur in einer oder zwei der mittleren Nuten (28, 30) angebracht sind.

9. Reifen nach mindestens einem der vorhergehenden Ansprüche, wobei die Profilstege (32) eine Form aufweisen, die im Allgemeinen die Form eines Vierecks hat, das eine in Umfangsrichtung verlaufende Abmessung aufweist; und wobei die Profilstege (32) entlang der Längsseiten des jeweiligen Profilstegs (32) durch benachbarte Rippen (18, 20, 22) der Lauffläche (12) und entlang der Querseiten durch Stirnwände (34) des jeweiligen Profilstegs (32) begrenzt sind; wobei die Stirnwände (34) vorzugsweise winklig ausgebildet sind.

10. Reifen nach mindestens einem der vorhergehenden Ansprüche, wobei die Profilstegnut (36) einen oberen oder äußersten Abschnitt (37) in der radialen Richtung aufweist, der vorzugsweise den Abschnitt mit der geringsten Breite der Profilstegnut (36) in der axialen Richtung darstellt; wobei sich die Profilstegnut (36) in seitlicher Richtung nach außen verjüngt, wenn man in radialer Richtung nach innen geht, wodurch sich die axiale Dicke bis zu einem unteren Abschnitt (40) in radialer Richtung erhöht, der in axialer Richtung breiter ist; und wobei, wenn man sich vom unteren Abschnitt (40) in radialer Richtung weiter in radialer Richtung nach innen entfernt, die gegenüberliegenden Seitenwände (33, 35) einzeln eine konstante Breite aufweisen und vorzugsweise in Form eines unteren Abschnitts (42) enden, der eine im Allgemeinen abgerundete, kreisförmige oder halbkreisförmige Form aufweist.

11. Reifen nach mindestens einem der vorhergehenden Ansprüche, wobei die individuelle konstante Breite sich über einen radialen Abstand erstreckt, der in einem Bereich von 1 bis 3 mm liegt; und/oder wobei der untere Abschnitt 42 eine axiale Breite aufweist, die in einem Bereich von 2 bis 4 mm liegt; und vorzugsweise an der in der radialen Richtung innersten Basis des Profilstegs (32) angeordnet ist.

12. Reifen nach mindestens einem der vorhergehenden Ansprüche, wobei die maximale axiale Breite der Profilstegnut (36) im oberen Abschnitt (37) in einem Bereich von 0,5 mm bis 1,5 mm liegt oder derart ist, dass die gegenüberliegenden Seitenwände (33, 35) des Profilstegs in Kontakt miteinander kommen und sich dadurch bei Inbetriebnahme des Reifens (10) unter der Last, für die der Reifen (10) ausgelegt ist, schließen, wobei der Profilstegkanal (4) offen bleibt.

13. Reifen nach mindestens einem der vorhergehenden Ansprüche, wobei die mittlere Rippe (22) und die Zwischenrippen (18, 20) eine Breite aufweisen, die einen Wert darstellt, der in einem Bereich von 50 bis 80 Prozent der relativ breiteren Schulterrippen (14, 16) liegt; vorzugsweise weisen die Schulterrippen (14, 16) eine axiale Breite auf, die in einem Bereich von 40 mm bis 60 mm liegt.

14. Reifen nach mindestens einem der vorhergehenden Ansprüche, wobei der Reifen (10) ein Lkw-Reifen ist.

15. Reifen nach mindestens einem der vorhergehenden Ansprüche, wobei der Reifen (10) ein Reifen ist, der für die Lenkachse eines Lastkraftwagens bestimmt ist.

## Revendications

1. Bandage qui comprend une bande de roulement de bandage (12) qui elle-même comprend une première et une deuxième nervure (18, 22) ; dans lequel la première et la deuxième nervure (18, 22) sont séparées par une rainure de bande de roulement (28) ; dans lequel un certain nombre d'éléments discrets (32) faisant office de pont de gomme sont disposés au sein de la rainure de bande de roulement (28) ; dans lequel des éléments (32) faisant office de pont de gomme, qui sont adjacents dans la direction circonférentielle, sont séparés par un écartement circonférentiel qui se situe au sein d'une plage allant de 15 mm à 90 mm ; dans lequel les éléments (32) faisant office de pont de gomme possèdent des parois latérales opposées (33, 35) qui sont séparées par une rainure de pont de gomme (36) qui s'étend dans la direction radiale ; et dans lequel la rainure de pont de gomme (36) qui s'étend dans la direction radiale subit un rétrécissement à partir d'une première largeur axiale jusqu'à une deuxième largeur, la deuxième largeur étant plus large que la première largeur, lorsque l'on s'éloigne vers l'intérieur dans la direction radiale dans la rainure de pont de gomme (36).

2. Bandage selon la revendication 1, dans lequel la rainure de pont de gomme (36) possède une portion inférieure dans la direction radiale ; dans lequel les parois latérales opposées (33, 35) sont espacées l'une de l'autre sur une largeur constante.

3. Bandage selon la revendication 1 ou 2, dans lequel l'élément (32) faisant office de pont de gomme possède une surface supérieure évidée (39) par rapport à une surface supérieure (58) de la bande de roulement (12).

4. Bandage selon au moins une des revendications précédentes, dans lequel l'écartement dans la direction circonférentielle se situe dans une plage allant de 15 à 45 mm.

5. Bandage selon au moins une des revendications précédentes, dans lequel l'élément (32) faisant office de pont de gomme englobe un canal de pont de gomme (4), inférieur dans la direction radiale.

6. Bandage selon la revendication 5, dans lequel le canal de pont de gomme (4), inférieur dans la direction radiale est configuré d'une manière telle qu'il reste ouvert au cours de la mise en service du bandage (10) sous une charge pour laquelle le bandage (10) est conçu.

7. Bandage selon au moins une des revendications précédentes, dans lequel la bande de roulement (12) englobe une nervure centrale (22), une première et une deuxième nervure d'épaulement (14, 16) qui sont disposées de chaque côté de la nervure centrale (22), une première et une deuxième nervure intermédiaire (18, 20) qui sont disposées sur les côtés opposés de la nervure centrale (22) et une paire de rainures intermédiaires (28, 30), qui s'étendent de manière continue dans la direction circonférentielle, qui sont situées entre la nervure centrale (22) et une nervure intermédiaire respective (18, 20), et, de manière facultative, dans lequel la bande de roulement (12) comprend en outre une paire de nervures d'épaulement (24, 26) continues dans la direction circonférentielle qui séparent, de manière respective, les nervures intermédiaires (18, 20) des nervures d'épaulement (14, 16).

8. Bandage selon au moins une des revendications précédentes, dans lequel un certain nombre desdits éléments discrets (32) faisant office de pont de gomme sont espacés les uns des autres dans la direction circonférentielle autour de la circonférence du bandage (10) ; et dans lequel lesdits éléments (32) faisant office de pont de gomme sont situés au sein d'une ou de plusieurs desdites rainures (28, 30, 24, 26), de préférence au moins ou uniquement au sein d'une rainure ou de deux rainures parmi les rainures intermédiaires (28, 30).

9. Bandage selon au moins une des revendications précédentes, dans lequel les éléments (32) faisant office de pont de gomme possèdent une configuration qui prend généralement la forme d'un quadrilatère qui présente une dimension allongée dans une direction circonférentielle ; et dans lequel les éléments (32) faisant office de pont de gomme sont délimités le long des côtés longitudinaux de l'élément respectif (32) faisant office de pont de gomme par des nervures adjacentes (18, 20, 22) de la bande de roulement (12) et le long des côtés transversaux par des parois terminales (34) de l'élément respectif (32) faisant office de pont de gomme ; dans lequel les parois terminales (34) sont de préférence de forme angulaire.

10. Bandage selon au moins une des revendications précédentes, dans lequel la rainure de pont de gomme (36) possède une portion supérieure ou la plus externe (37) dans la direction radiale qui représente de préférence la portion possédant la largeur de la rainure de pont de gomme (36), la plus étroite dans la direction axiale ; dans lequel la rainure de pont de gomme (36) se rétrécit dans la direction latérale vers l'extérieur lorsque l'on s'éloigne vers l'intérieur dans la direction radiale, ce qui donne lieu à une augmentation de l'épaisseur axiale jusqu'à obtenir une portion inférieure (40) dans la direction radiale, qui est plus large dans la direction axiale ; et dans lequel, lorsque l'on s'éloigne par rapport à la portion inférieure (40) dans la direction radiale, plus loin dans la direction radiale vers l'intérieur, les parois latérales opposées (33, 35) possèdent une largeur constante de manière individuelle, et de préférence se terminent sous la forme d'une portion inférieure (42) qui possède une configuration généralement de forme arrondie, circulaire ou semi-circulaire.

11. Bandage selon au moins une des revendications précédentes, dans lequel la largeur constante individuelle s'étend sur une distance radiale qui se situe dans une plage allant de 1 à 3 mm ; et/ou dans lequel la portion inférieure 42 possède une largeur axiale qui se situe dans une plage allant de 2 à 4 mm ; et de préférence qui se situe au niveau de la base la plus interne dans la direction radiale, de l'élément (32) faisant office de pont de gomme.

12. Bandage selon au moins une des revendications précédentes, dans lequel la largeur axiale maximale de la rainure de pont de gomme (36) dans la portion supérieure (37) se situe au sein d'une plage allant de 0,5 mm à 1,5 mm ou est telle que les parois latérales opposées (33, 35) du pont de gomme entrent en contact l'une avec l'autre et de cette manière se ferment au cours de la mise en service du bandage (10) sous la charge pour laquelle est conçu le bandage (10), tandis que le canal de pont de gomme (4) reste ouvert.

13. Bandage selon au moins une des revendications précédentes, dans lequel la nervure centrale (22) et les nervures intermédiaires (18, 20) possèdent une largeur qui représente une valeur qui se situe dans une plage allant de 50 à 80 pour cent des nervures d'épaulement (14, 16) relativement plus larges ; de préférence, des nervures d'épaulement (14, 16) possèdent une largeur axiale qui se situe au sein d'une plage allant de 40 mm à 60 mm.

14. Bandage selon au moins une des revendications précédentes, dans lequel le bandage (10) est un bandage pour camion.

15. Bandage selon au moins une des revendications précédentes, dans lequel le bandage (10) représente un bandage qui est destiné à l'essieu directeur d'un camion.
